# DEMANDE DE BREVET EUROPEEN

(11) **EP 0 841 745 A1**
(43) Date de publication de la demande: **13.05.1998**
(21) Numéro de dépôt: 97402499.4
(22) Date de dépôt: 22.10.1997
(51) Int. Cl.: H02P 7/622

(54) **Circuit d'alimentation d'un moteur asynchrone thriphasé à partir d'une source de tension monophasée**

(30) Priorité: 07.11.1996 FR 9613594
(71) Demandeur: KSB S.A., 92230 Gennevilliers (FR)
(72) Inventeur: Berthon, Jacques, 36250 Saint-Maur (FR)
(74) Mandataire: Eidelsberg, Victor Albert

(57) **Abrégé**

Dans ce circuit d'alimentation d'un moteur triphasé, l'interrupteur (6) du circuit déphaseur (43) est notamment un triac. Le circuit déphaseur (43) est mis en oeuvre par un commutateur (42) lorsque le convertisseur de fréquence (34) tombe en panne.

## Description

On connaît déjà un circuit d'alimentation d'un moteur asynchrone triphasé à partir d'une source de tension monophasée, comme cela est souhaitable dans bien des cas, notamment lorsque le moteur est destiné à un appareil pour le grand public et qu'il est souhaitable de l'alimenter à partir du secteur. La solution la plus généralement utilisée consiste à monter un convertisseur de fréquence entre la source et le moteur. Mais, si le convertisseur de fréquence tombe en panne, on ne peut plus alimenter le moteur triphasé par le secteur monophasé. Le client se trouve en présente d'une panne qui ne peut être réparée que par le changement du convertisseur.

Au US-3 746 951, on ne se préoccupe pas d'alimenter un moteur triphasé à partir d'une source de tension monophasée, mais uniquement d'alimenter un moteur monophasé. Il n'est pas prévu de convertisseur de fréquence qui puisse tomber en panne. On décrit dans ce document un circuit de démarrage de moteur monophasé.

A la demande de brevet européen n° 499 470, on prévoit un convertisseur de fréquence et un commutateur apte dans une position à faire entrer en fonctionnement un circuit déphaseur à interrupteur, constitué essentiellement d'un condensateur. Ce condensateur est nécessairement très volumineux et très coûteux.

La présente invention pallie cet inconvénient par un circuit d'alimentation d'un moteur asynchrone triphasé à partir d'une source de tension monophasée qui, même si le convertisseur de fréquence tombe en panne, permet un fonctionnement au moins dégradé en attendant que la panne soit réparée et qui, néanmoins, ne met pas en oeuvre un condensateur volumineux et coûteux.

Le circuit d'alimentation suivant l'invention est défini à la revendication 1.

Les sous revendications définissent des modes de réalisation préférés.

Ce circuit d'alimentation génère des harmoniques qui diminuent beaucoup le rendement du moteur. Mais cet inconvénient disparaît pratiquement lorsque le moteur est à rotor noyé ou lorsque le volume des joues rotoriques est inférieur au volume des barreaux de la cage rotorique, c'est-à-dire lorsque la résistance des joues est inférieure à la résistance des barreaux, étant entendu qu'il conviendrait de corriger ce rapport des volumes par la résistivité des matériaux s'ils n'étaient pas les mêmes. Or, des moteurs de ce genre sont précisément utilisés souvent dans les pompes de chauffage et de climatisation, dans les pompes de surpression, dans les ventilateurs, en sorte que, pour des moteurs asynchrones triphasés destinés à des appareils de ce genre, l'inconvénient mentionné précédemment n'existe pratiquement pas.

Au dessin annexé, donné uniquement à titre d'exemple :
la figure 1 illustre une partie d'un circuit suivant l'invention ;
la figure 2 donne des courbes de variation de la tension en fonction du temps du circuit de la figure 1 ;
les figures 3, 4 et 5 illustrent trois exemples d'interrupteurs électroniques ;
la figure 6 est une vue en coupe d'un type de moteur que le circuit d'alimentation alimente de préférence ; et
la figure 7 est une vue d'un circuit d'alimentation d'un moteur avec le convertisseur de fréquence.

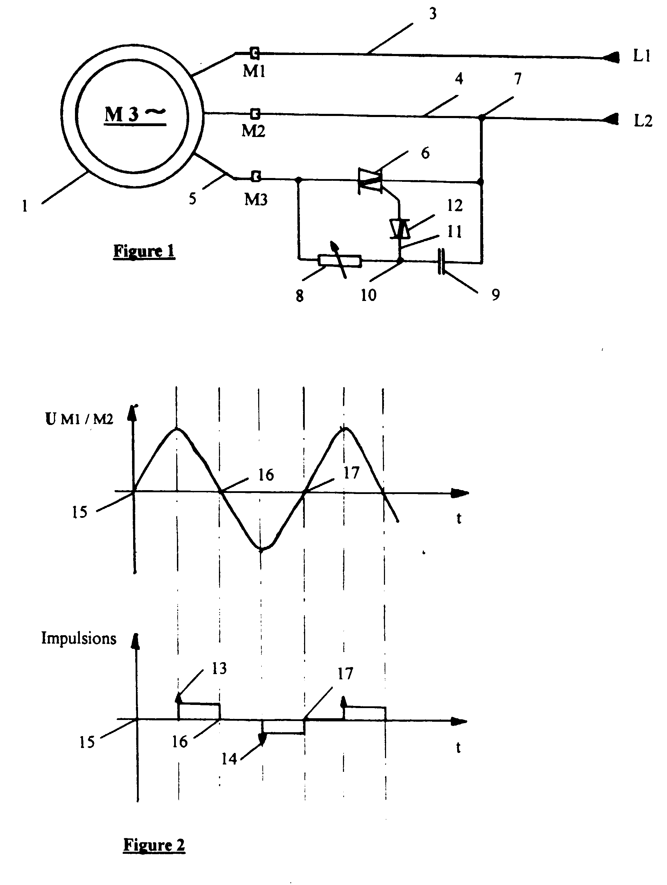

Le circuit représenté à la figure 1 permet d'alimenter un moteur 1 asynchrone triphasé à partir des bornes L1,L2 du secteur. Le circuit comporte une ligne de phase 3, une ligne de phase 4 et une ligne de phase 5. Sur la ligne de phase 5 est monté un triac 6, la ligne de phase 5 rejoignant la ligne de phase 4 en un point 7. En parallèle au triac 6 est montée une résistance 8 et un condensateur 9 servant de dispositif de réglage de l'angle de phase. D'un point 10 intermédiaire entre la résistance 8 et le condensateur 9 part un conducteur 11 sur lequel est monté un diac 12 qui commande le triac 6. Les éléments 6, 8, 9 et 12 forment le circuit déphaseur 43.

Le graphique du haut de la figure 2 représente la tension du secteur. Sur le deuxième graphique de la figure 2 ont été représentées deux impulsions 13 et 14 données par le diac 12 et qui font se fermer le triac 6 interrupteur en permettant le passage du courant. Ces impulsions ont lieu entre les points 15, 16 et 17 où la tension dans la ligne de phase 4 s'annule. On obtient ainsi dans la ligne de phase 5 la tension représentée dans le graphique du bas de la figure 2. Cela crée un déphasage suffisant pour créer une troisième ligne de phase permettant au moteur 1 de fonctionner.

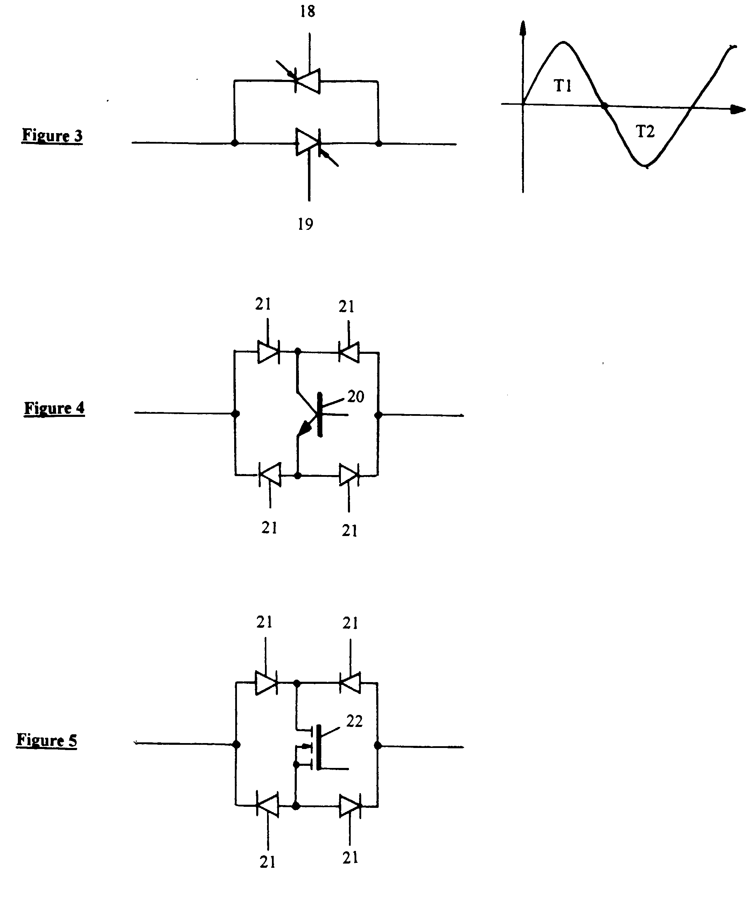

A la figure 3, le triac est remplacé par un couple de thyristors 18, 19 montés tête-bêche.

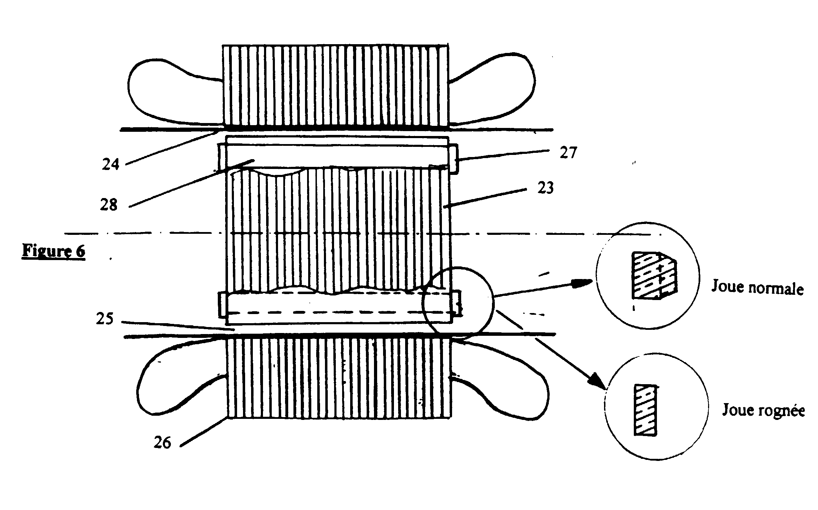

A la figure 4, le triac est remplacé par un transistor 20 à pont de diodes 21, tandis qu'à la figure 5, le transistor 20 de la figure 4 est remplacé par un transistor 22 à effet de champ.

Le moteur représenté à la figure 6 est un moteur à rotor 23 noyé qui est donc entouré d'une chemise 24 en sorte que l'entrefer 25 entre le rotor 23 et le stator 26 est assez grand pour permettre le passage de l'eau et diminue d'autant le couplage magnétique entre le rotor 23 et le stator 26. Les joues 27 rotoriques sont en cuivre, de même que les barreaux 28 de la cage rotorique. Le volume des joues rotoriques est inférieur au volume de l'ensemble des barreaux de la cage rotorique.

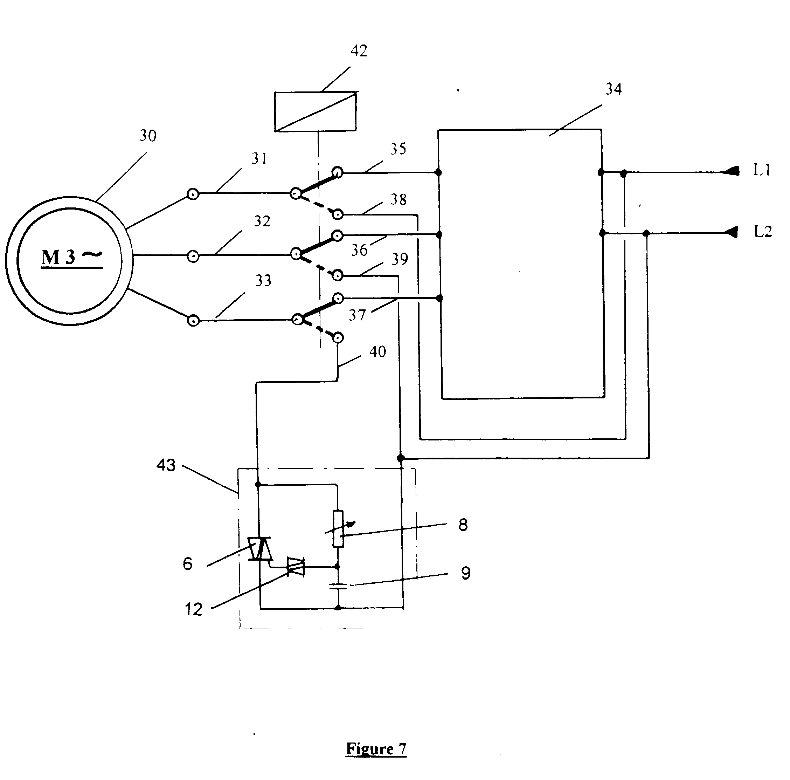

A la figure 7, un moteur 30 asynchrone ayant trois lignes de phase 31, 32, 33 est alimenté par le secteur L1L2 par l'intermédiaire d'un convertisseur de fréquence 34 et des lignes 35, 36 et 37. Un commutateur 42 permet d'interrompre la liaison entre les lignes 31 et 35, 32 et 36, et 33 et 37 respectivement pour l'établir entre les lignes 31 et 38, 32 et 39, et 33 et 40, les lignes 38 et 39 contournant le convertisseur 34 de fréquence et aboutissant aux bornes L1,L2 du secteur. La ligne 40 est reliée au triac 46.

## Revendications

1. Circuit d'alimentation d'un moteur (30) asynchrone triphasé ayant trois lignes (31, 32, 33) à partir d'une source de tension monophasée ayant deux lignes (L₁, L₂) par l'intermédiaire d'un convertisseur de fréquence (34) ayant trois lignes de sortie (35, 36, 37), comprenant un commutateur (42) qui, dans une première position, relie respectivement les trois lignes de sortie (35, 36, 37) aux trois lignes (31, 32, 33) d'alimentation du moteur et qui, dans une seconde position, interrompt ces trois liaisons et relie, directement en excluant le convertisseur (34), la ligne (L₁) à la première ligne (31) par un conducteur (38), la ligne (L₂), d'une part, à la deuxième ligne (32) par un conducteur (39) et, d'autre part, à un circuit déphaseur (43) à interrupteur dont la ligne de sortie (40) est reliée à la troisième ligne (33) du moteur, caractérisé en ce que l'interrupteur (6) du circuit déphaseur (43) est un triac, un couple de thryristors ou un transistor à pont de diodes commandé en angle de phase.

2. Circuit suivant la revendication 1, caractérisé en ce que le dispositif de commande comprend en parallèle à l'interrupteur (6) un circuit à résistance (8) et condensateur (9), tandis qu'un dispositif (12) de décharge brusque du condensateur (9) à une tension donnée est interposé entre l'interrupteur (6) et un point médian (10) entre le condensateur (9) et la résistance (8).

3. Circuit suivant la revendication 1 ou 2, caractérisé en ce qu'il est associé à un moteur asynchrone triphasé dont le volume des joues rotoriques est inférieur au volume des barreaux de la cage rotorique et/ou à un moteur rotor noyé.
